# EUROPEAN PATENT SPECIFICATION

(11) **EP 1 889 779 B1**
(45) Date of publication and mention of the grant of the patent: **25.03.2009**
(21) Application number: 06118950.2
(22) Date of filing: 15.08.2006
(51) Int. Cl.: B63B 21/50

(54) **Roller bearing system for mounting a turret in a vessel**
Wälzlagersystem zum Einbau eines Drehturmes in einem Schiff
Système de paliers à roulement pour le montage d'une tourelle rotative dans un bateau

(43) Date of publication of application: 20.02.2008
(73) Proprietor: Bluewater Energy Services B.V., 2132 HR Hoofddorp (NL)
(72) Inventor: de Baan, Jacob, 3146 BH Maassluis (NL)
(74) Representative: de Vries, Johannes Hendrik Fokke

(56) References cited:
- WO-A-97/48595
- GB-A- 2 320 231

## Description

The invention relates to a roller bearing system for mounting a turret in a vessel, comprising an inner ring, an outer ring and at least one set of rollers arranged between the inner and outer rings, wherein the inner and outer rings are provided with raceways at the location of the rollers.

In offshore oil and gas production, large tankers are moored by means of a so-called turret mooring system as disclosed for example in WO 97/48595, which is considered to be the closest prior art, and also in GB-A-2 150 517 and EP-A-0 259 072. Such a turret mooring system allows a large tanker to weathervane freely into the direction of the prevailing weather, such that the tanker is least exposed to wave and wind forces and exhibits a better seakeeping behaviour. The turret mooring system can be a significant structure and many forms and shapes are possible. Advantageous in most cases is the use of a roller bearing system, in particular a so-called three race roller bearing system, between turret and ship hull as such a bearing system allows the tanker to weathervane with minimum resistance. A drawback of such a roller bearing system is that it is virtually impossible to replace or repair at sea. If a major failure of the bearing rolling elements occurs which prevents the bearing system from functioning as intended, the tanker has to be removed to a harbour. Removal of the tanker from the production site is extremely time consuming and the loss of its oil and gas production capacity has therefore a large economic impact.

The object of the invention is to provide an improved roller bearing system of the above-mentioned type.

According to the invention the roller bearing system is characterized in that at least one of the raceways cooperating with said one set of rollers is movably mounted in a slot of the inner or outer ring (Claim 1).

In this manner a roller bearing system is obtained, wherein the movable raceway provides an additional capacity to rotate if a major failure of the bearing rolling elements occurs. This allows planning and preparation for a removal of the tanker to replace the bearing system.

The invention further provides a vessel, comprising a turret rotatably mounted in the vessel by means of a roller system of the invention.

The invention will now be explained in more detail with reference to the drawings schematically showing an embodiments of the roller bearing system according to the invention.

Fig. 1 schematically shows a cross-section of an embodiment of a vessel comprising an embodiment of the roller bearing system of the invention.

Fig. 2 shows a plan view of the roller bearing system of the vessel of Fig. 1.

Fig. 3 shows a cross-section according to the line III in Fig. 2.

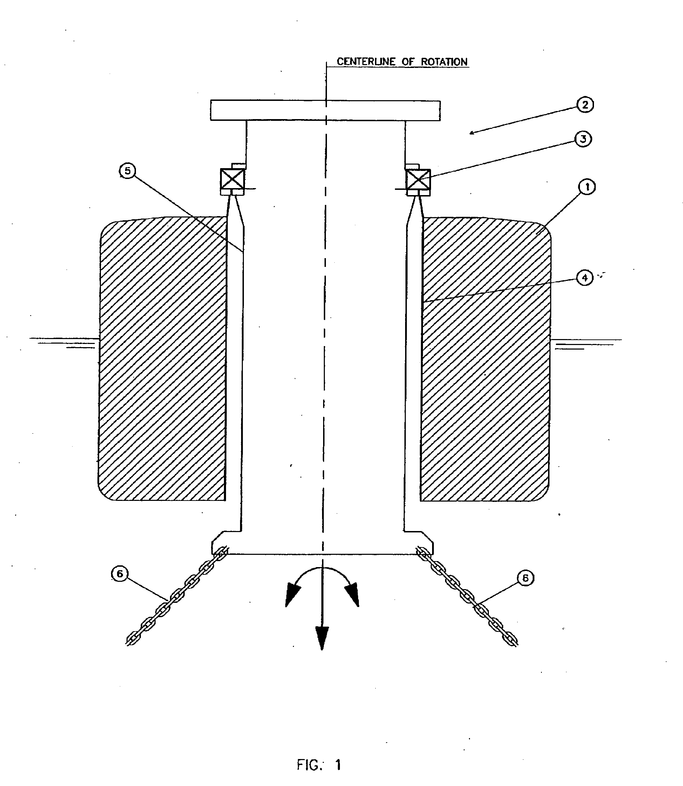

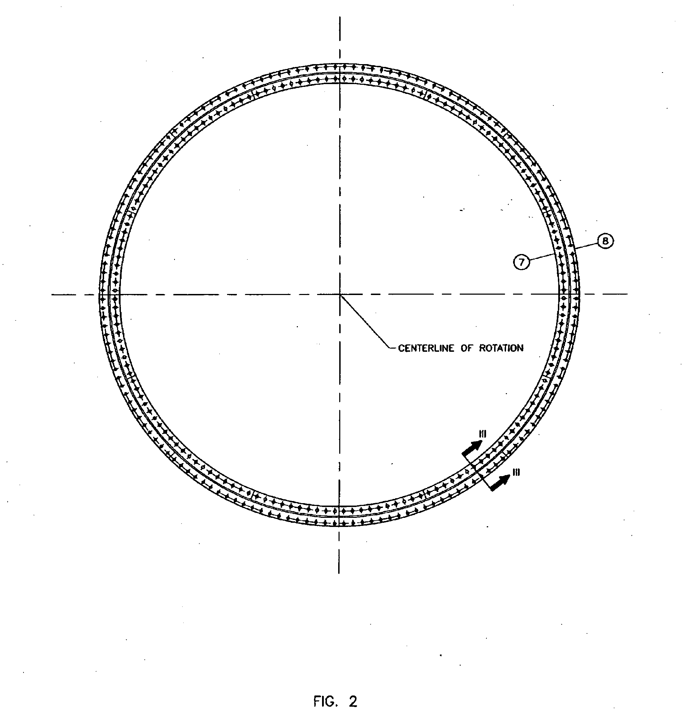

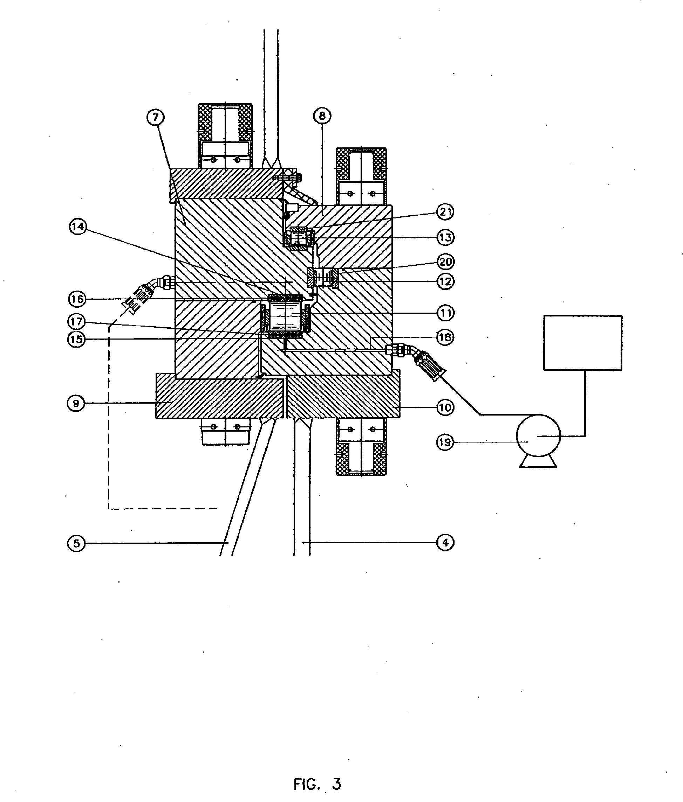

Fig. 1 shows in a very schematical manner a cross-section of a vessel 1, provided with a turret mooring system 2 comprising an embodiment 3 of the roller bearing system of the invention. Figs. 2 and 3 show a plan view and a cross-section of this roller bearing system 3.

The turret mooring system 2 comprises a moonpool 4 mounted in the vessel 1 and a turret 5 rotatably mounted within the moonpool 4 by means of the roller bearing system 3. The turret 5 is anchored to the seabed by means of a number of chains 6, two of which are partially shown in Fig. 1. In this manner, the vessel 1 can freely weathervane into the direction of the prevailing weather.

As shown in Figs. 2 and 3, the roller bearing system 3 comprises an inner ring 7 and an outer ring 8. The inner ring 7 is bolted to a flange 9 which is part of the turret 5 and the outer ring 8 is bolted to a flange 10 which is part of the hull of the vessel 1. Both the inner ring 7 and the outer ring 8 include two ring parts, which may be either continuous along their circumference or segmented, in case of very large diameter applications.

Between the inner ring 7 and outer ring 8 three sets of rollers 11, 12 and 13 are transposed, such that the inner ring 7 can transmit axial, radial and bending moment loads to the outer ring 8, and vice versa, while rotating as from time to time dictated by environmental conditions acting on the vessel 1. At the location of at least the set of rollers 11, the inner ring 7 and outer ring 8 are provided with slots 14, 15, in which separate raceways 16, 17 of a hardened material are fitted. In normal operation the separate raceways 16, 17 remain stationary in the corresponding slot 14, 15 and the rollers 11 roll on the raceways 16, 17 allowing the inner ring 7, i.e. the turret 5, to rotate relative to the outer ring 8, i.e. the vessel 1 so that the vessel can freely weathervane.

In case of a failure of the roller bearing system 3 due to one or more rollers being broken, blocked or jammed, the upper raceway 16 is adapted to move within the slot 14 of the inner ring 7 as the cooperating surfaces of the raceway 16 and slot 14 are machined to a smooth finish creating an additional interface suitable for sliding. Preferably a plurality of high pressure injection lines 18 are provided connected to a pump 19 to inject oil or grease as a lubricant at the interface between the raceway 16 and the slot 14. Typically, the number of injection lines 18 may be of the same order of magnitude as the number of bolt holes in each ring. Although it is preferred to mount upper raceway 16 movably in the corresponding slot 14 in a downwardly directed supporting face of the inner ring 7, it is also possible to mount lower raceway 17 movably in the corresponding slot 15 in an upwardly directed supporting face of the outer ring 8.

As the raceway 16 and/or the raceway 17 is movably mounted in its corresponding slot 14, 15, the roller bearing system 3 is adapted to continue to operate even in case of a failure of the rollers 11. Of course, a higher resistance against rotation exists as a sliding motion is facilitated subject to friction, not on establishing a hydrostatic bearing principle. However, since the turret mooring system 2 has a large resistance against rotation around a vertical axis, and the wave forces acting on the vessel 1 are large, this is no limitation for the vessel to weathervane so that the offshore operation may continue for a period of time also in case of roller failure. This period time allows planning and preparation for removal of the vessel 1 to a harbour to replace the roller bearing system 3. This period may typically be one to three years.

According to an advantageous embodiment, the surface of the raceway 16 and/or 17 cooperating with the opposite surface of the slot 14 and/or 15 or both surfaces may be provided with a layer showing improved sliding capabilities. This surface improvement may be achieved for example by a thermochemical process.

Although in the embodiment described only raceway 16 and/or raceway 17 are movably mounted in the corresponding slots 14, 15, it is also possible to mount one or both raceways 20 movably in corresponding slots at the location of the set of rollers 12. The same applies to one or both raceways 21 mounted in corresponding slots at the location of the set of rollers 13.

The invention is not limited to the embodiment as described above, which can be varied in many ways within the scope of the invention as defined in the claims.

## Claims

1. Roller bearing system for mounting a turret (5) in a vessel, comprising an inner ring (7), an outer ring (8) and at least one set of rollers (11,12,13) arranged between the inner and outer rings, wherein the inner and outer rings are provided with raceways (16,17) at the location of the rollers, **characterized in that** at least one of the raceways cooperating with said one set of rollers is movably mounted in a slot (14,15) of the inner or outer ring.

2. Roller bearing system according to claim 1,
wherein said one set of rollers is provided between an upper raceway mounted in a slot of the inner ring and a lower raceway mounted in a slot of the outer ring, wherein at least the upper raceway is movably mounted in the inner ring.

3. Roller bearing system according to claim 1 or 2, further comprising a supply system arranged to supply a lubricant at the interface between said raceway and the slot of the inner and/or outer ring.

4. Roller bearing system according to claim 3,
wherein the supply system comprises a plurality of high pressure injection lines provided in the inner and/or outer ring.

5. Roller bearing system according to any one of the preceding claims, comprising three sets of rollers, wherein a first set of rollers is provided between an upwardly directed supporting face of the outer ring and an opposite face of the inner ring, wherein a second set of rollers is provided between an upwardly directed face of the inner ring and an opposite face of the outer ring and a third set of rollers is provided an outwardly directed face of the inner ring and an opposite face of the outer ring, wherein at least the upper raceway of the first set of rollers is movably mounted in the inner ring.

6. Roller bearing system according to claim 5,
wherein the second and/or the third set of rollers cooperate with raceways movably mounted in the inner or outer ring.

7. Roller bearing system according to any one of the preceding claims, wherein the surface of each movable raceway and/or the surface of each slot provided with a movable raceway is provided with a surface layer with improved sliding capability.

8. Vessel, comprising a turret rotatably mounted in the vessel by means of a roller bearing system according to any one of the preceding claims.

## Patentansprüche

1. Rollenlagersystem zum Montieren eines Turms (5) in einem Wasserfahrzeug, umfassend einen inneren Ring (7), einen äußeren Ring (8) und zumindest einen Satz Rollen (11, 12, 13), die zwischen dem inneren und äußeren Ring angeordnet sind, wobei der innere und äußere Ring mit Laufbahnen (16, 17) am Ort der Rollen versehen ist, **dadurch gekennzeichnet, dass** zumindest eine der Laufbahnen, die mit dem einen Satz Rollen zusammenwirken, beweglich in einem Schlitz (14, 15) des inneren oder äußeren Rings montiert ist.

2. Rollenlagersystem nach Anspruch 1, wobei der eine Satz Rollen zwischen einer oberen Laufbahn, die in einem Schlitz des inneren Rings montiert ist, und einer unteren Laufbahn, die in einem Schlitz des äußeren Rings montiert ist, vorhanden ist, wobei zumindest die obere Laufbahn beweglich in dem inneren Ring montiert ist.

3. Rollenlagersystem nach Anspruch 1 oder 2, ferner umfassend ein Zuführungssystem, das angeordnet ist, um einen Schmierstoff an der Grenzfläche zwischen der Laufbahn und dem Schlitz des inneren und/oder äußeren Rings zuzuführen.

4. Rollenlagersystem nach Anspruch 3, wobei das Zuführungssystem eine Mehrzahl von Hochdruckeinspritzleitungen umfasst, die in dem inneren und/oder äußeren Ring vorhanden sind.

5. Rollenlagersystem nach einem der vorstehenden Ansprüche, umfassend drei Sätze von Rollen, wobei ein erster Satz Rollen zwischen einer nach oben gerichteten Haltefläche des äußeren Rings und einer gegenüber liegenden Fläche des inneren Rings vorhanden ist, wobei ein zweiter Satz Rollen zwischen einer nach oben gerichteten Fläche des inneren Rings und einer gegenüber liegenden Fläche des äußeren Rings vorhanden ist, und ein dritter Satz Rollen zwischen einer nach außen gerichteten Fläche des inneren Rings und einer gegenüber liegenden Fläche des äußeren Rings vorhanden ist, wobei zumindest die obere Laufbahn des ersten Satzes Rollen beweglich in dem inneren Ring montiert ist.

6. Rollenlagersystem nach Anspruch 5, wobei der zweite und/oder dritte Satz Rollen mit Laufbahnen zusammenwirkt, die beweglich in dem inneren oder äußeren Ring montiert sind.

7. Rollenlagersystem nach einem der vorstehenden Ansprüche, wobei die Oberfläche von jeder beweglichen Laufbahn und/oder die Oberfläche von jedem Schlitz, der mit einer beweglichen Laufbahn versehen ist, mit einer Oberflächenschicht mit verbesserter Gleitfähigkeit versehen ist.

8. Wasserfahrzeug, umfassend einen Turm, der drehbar in dem Wasserfahrzeug durch ein Rollenlagersystem nach einem der vorstehenden Ansprüche montiert ist.

## Revendications

1. Système de roulement à rouleaux pour le montage d'une tourelle (5) dans un navire, comprenant une bague interne (7), une bague externe (8) et au moins un jeu de rouleaux (11, 12, 13) disposés entre les bagues interne et externe, dans lequel les bagues interne et externe sont munies de chemins de roulement (16, 17) à l'emplacement des rouleaux, **caractérisé en ce qu'**au moins un des chemins de roulement coopérant avec ledit au moins un jeu de rouleaux est monté de manière mobile dans une fente (14, 15) de la bague interne ou externe.

2. Système de roulement à rouleaux selon la revendication 1, dans lequel ledit un jeu de rouleaux est positionné entre un chemin de roulement supérieur monté dans une fente de la bague interne et un chemin de roulement inférieur monté dans une fente de la bague externe, dans lequel au moins le chemin de roulement supérieur est monté de manière mobile dans la bague interne.

3. Système de roulement à rouleaux selon la revendication 1 ou 2, comprenant en outre un système d'alimentation disposé de sorte à fournir un lubrifiant à l'interface entre ledit chemin de roulement et la fente de la bague interne et/ou externe.

4. Système de roulement à rouleaux selon la revendication 3, dans lequel le système d'alimentation comprend une pluralité de lignes d'injection haute pression positionnées dans la bague interne et/ou externe.

5. Système de roulement à rouleaux selon l'une quelconque des revendications précédentes, comprenant trois jeux de rouleaux, dans lequel un premier jeu de rouleaux est positionné entre une face de support orientée vers le haut de la bague externe et une face opposée de la bague interne, dans lequel un deuxième jeu de rouleaux est positionné entre une face orientée vers le haut de la bague interne et une face opposée de la bague externe, et un troisième jeu de rouleaux est positionné entre une face orientée vers l'extérieur de la bague interne et une face opposée de la bague externe, dans lequel au moins le chemin de roulement supérieur du premier jeu de rouleaux est monté de manière mobile dans la bague interne.

6. Système de roulement à rouleaux selon la revendication 5, dans lequel le deuxième et/ou le troisième jeu de rouleaux coopère(nt) avec des chemins de roulement montés de manière mobile dans la bague interne ou externe.

7. Système de roulement à rouleaux selon l'une quelconque des revendications précédentes, dans lequel la surface de chaque chemin de roulement mobile et/ou la surface de chaque fente munie d'un chemin de roulement mobile, est munie d'une couche superficielle à capacité améliorée de glissement.

8. Navire, comprenant une tourelle montée de manière à pouvoir pivoter dans le navire au moyen d'un système de roulement à rouleaux selon l'une quelconque des revendications précédentes.
